# EUROPEAN PATENT SPECIFICATION

(11) **EP 3 388 291 B1**
(45) Date of publication and mention of the grant of the patent: **18.11.2020**
(21) Application number: 17166087.1
(22) Date of filing: 11.04.2017
(51) Int. Cl.: B60R 25/23, B60R 25/24, G07C 9/00

(54) **AUTOMOTIVE ENTRY AND ENGINE IGNITION CONTROL**
AUTOMOBILE ZUTRITTS- UND MOTORZÜNDSTEUERUNG
ENTRÉE D'AUTOMOBILE ET COMMANDE D'ALLUMAGE DE MOTEUR

(43) Date of publication of application: 17.10.2018
(73) Proprietor: FCA Italy S.p.A., 10135 Torino (IT)
(72) Inventor: GRAMAGLIA, Enrico, 10135 TORINO (IT)
(74) Representative: Bergadano, Mirko

(56) References cited:
- EP-A1- 1 429 294
- EP-A1- 1 900 578
- EP-A1- 2 014 523
- EP-A2- 0 908 589
- WO-A2-2010/106413
- DE-A1-102011 116 209
- GB-A- 2 426 102
- JP-A- 2010 242 376
- US-A1- 2015 102 898
- AURELIEN FRANCILLON ET AL: "Relay Attacks on Passive Keyless Entry and Start Systems in Modern Cars", INTERNATIONAL ASSOCIATION FOR CRYPTOLOGIC RESEARCH,, vol. 20101021:205436, 21 October 2010 (2010-10-21), pages 1-15, XP061004286, [retrieved on 2010-10-21]

## Description

### Technical Field of Invention

The present invention relates to a keyless entry control and to a key or keyless engine ignition control in a motor vehicle.

### State of the Art

As is known, in the automotive field, keyless entry control and key or keyless engine ignition control in motor vehicles has always represented a key safety issue in theft prevention.

Known keyless entry controls and key or keyless engine ignition controls are for example disclosed in DE 10 2011 116209 A1, GB 2 426 102 A, EP 1 429 294 A1, EP 1 900 578 A1, EP 0 908 589 A2, WO 2010/106413 A2, US 2015/102898 A1, EP 2 014 523 A1, JP 2010 242376 A, and Aurelien Francillon et al: "Relay Attacks on Passive Keyless Entry and Start Systems in Modern Cars", International Association For Cryptologic Research, vol. 20101021:205436, 21 October 2010 (20101021), pages 1-15, XP061004286.

### Object and Summary of the Invention

The object of the present invention is to provide a technology that contributes to improving security level in automotive entry and engine ignition control.

According to the present invention, an automotive entry and engine ignition control system is provided, as claimed in the appended claims.

### Brief Description of Drawings

Figure 1 shows a block diagram of an automotive entry and engine ignition control system of the present invention.
Figures 2 to 5 show graphical representations of a graphical user interface and relating to an automotive entry and engine ignition control of the present invention.

### Detailed Description of Preferred Embodiments of the Invention

The present invention will now be described in detail with reference to the accompanying drawings to enable an expert in the field to embody it and use it. Various modifications to the described embodiments will be immediately obvious to experts in the field, and the generic principles described herein can be applied to other embodiments and applications without departing from the scope of the present invention, as defined in the appended claims. Thus, the present invention should not be considered as limited to the embodiments disclosed herein, but is to be accorded the widest scope consistent with the claimed features.

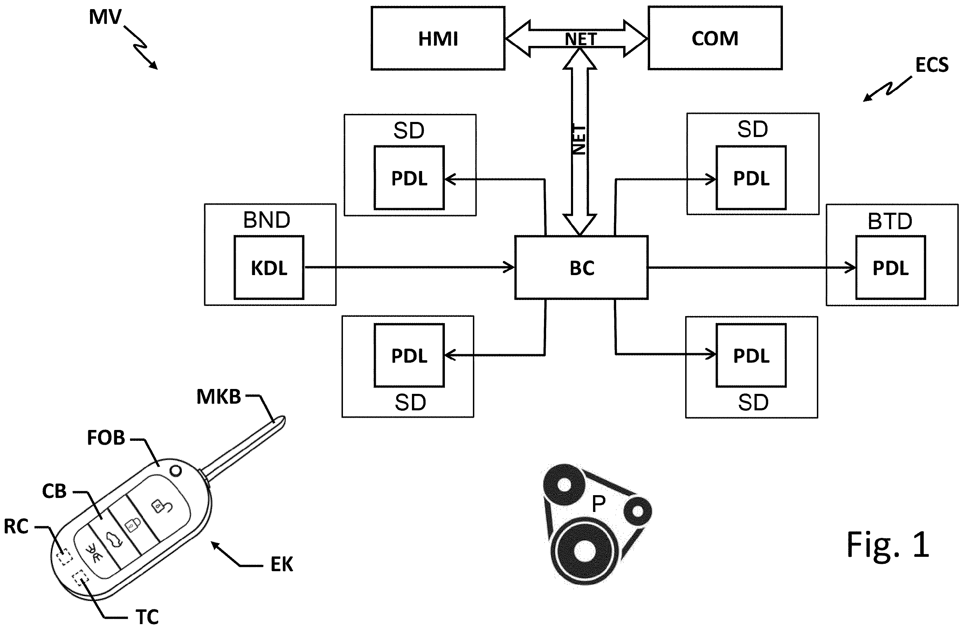

Figure 1 shows a conceptual block diagram of an automotive electronic control system designed to implement, *inter alia,* an automotive entry and engine ignition control according to the present invention.

The automotive electronic control system **ECS**, only those parts of which that are pertinent to the implementation of the present invention are shown in Figure 1, basically comprises:
- a short-range wireless communications system **COM** designed to communicate with automotive coded electronic keys **EK** of a motor vehicle **MV** to allow the motor vehicle **MV** to be entered and the motor vehicle engine **P** to be ignited;
- an automotive human-machine interface **HMI** comprising an input device designed to allow data, commands and selections to be inputted and typically comprising buttons and knobs arranged in various points of a passenger compartment of the motor vehicle **MV**, including a steering wheel and a central console, as well as a keypad, usually arranged on the central console, in combination with, or in alternative to, a touch-sensitive graphical display, and one or more displays, typically comprising a first display arranged in the instrument cluster panel (ICP), usually between a vehicle speed gauge and an engine RPM gauge, and, when provided, also a second display, typically of the touch-sensitive type, arranged on the central console, and on each of which a graphical user interface (GUI) is displayed; and
- a body computer **BC** connected, via an automotive onboard communication network **NET**, for example CAN, FlexRay or others, to various on-vehicle systems and devices and programmed, *inter alia,* to implement automotive entry and engine ignition control according to the present invention, which shall be described in detail hereinafter and briefly referred to as Key Lock Feature (**KLF**).

Hereinafter the term body computer is not to be intended to identify only the specific automotive electronic component that would presently implement the Key Lock Feature, but any electronic processing unit, concentrated or distributed, present or future, that may implement the Key Lock Feature.

In order for it to be implemented, the Key Lock Feature necessitates that the automotive electronic control system **ECS** be desgined to allow motor vehicle doors to be centrally locked and unlocked, usually the side doors, both the front one and, if provided, the rear ones, as well as the rear hatch/boot lid.

To this end, the doors that are wished to be centrally lock and unlock are provided with power-operated locks controlled by the body computer and one of these, typically that associated to the front door on the driver's side, and possibly that associated to the hatch/boot lid, are of the type with a cylinder for a mechanical key (key-cylinder lock), while the others are usually without a cylinder for a mechanical key (key-cylinder-less lock).

In Figure 1, the side doors are indicated by **SD**, the hatch/boot lid by **BTD**, the engine bonnet by **BND**, the power-operated locks by **PDL**, and the non-power-operated locks, typically only that of the bonnet **BND**, are instead indicated by **KDL.**

In order for it to be implemented, the Key Lock Feature further necessitates that the automotive electronic control system **ECS** be further designed to allow a so-called remote keyless system (RKS) to be implemented, i.e. a system designed to allow functions of a traditional mechanical key to be contactlessly implemented, i.e. without requiring the mechanical key to physically engage a mechanical counterparty, whether it is a cylinder for the mechanical key in a power-operated door lock, or an ignition switch of the motor vehicle, usually arranged on a steering column or on a motor vehicle dashboard.

For this reason, a remote keyless system is a system designed to allow at least remote keyless entry (RKE) to the motor vehicle, and possibly also remote keyless ignition (RKI) of the motor vehicle engine.

As is known, keyless entry to the motor vehicle allows power-operated door locks of the motor vehicle to be centrally locked and unlocked, either by means of a remote control integrated in the electronic keys, or when the electronic keys are proximate to the motor vehicle.

For this reason, these electronic keys **EK** comprise a key fob **FOB** integrating a remote control **RC** designed to transmit RF signals encrypted with a unique electronic identification code of the electronic key in response to operation of control buttons **CB** provided to implement functions described hereinafter, and, in the more advanced versions, also known as smart keys, further integrating a transponder chip **TP** programmed to communicate with the short-range wireless communications system **COM** in the motor vehicle **MV** to cause the power-operated door locks **PDL** of the motor vehicle **MV** to be centrally locked and unlocked without any need for a user to intervene.

For this reason, these electronic keys **EK** are usually referrred to as fobik (from fob-integrated key) or RKE (from remote keyless entry).

These electronic keys **EK** may also be provided with a mechanical key **MKB** desgined to engage the ignition switch to ignite the motor vehicle engine, subject to recognition of an authentication code of the electronic key **EK** by the body computer **BC.**

The mechanical key **MKB** may be a traditional blade-shaped key or may be formed by an appropriately shaped (for example, parallelepiped) end portion, also referred to as tip, of the key fob **FOB.**

The blade-shaped mechanical key **MKB** may be fixed with respect to the key fob **FOB** or may be extractably housed in the key fob **FOB,** wherein extraction may be achieved via a rotation about a hinge point or via a sliding out from an associated receptacle in response to operation of an extraction button **EB.**

In electronic keys **EK** provided with a blade-shaped mechanical key **MKB**, entry to the motor vehicle **MV** is also guaranteed in the event of failure or malfunctioning of the remote control **RC** and of the transponder chip **TP**, as the blade-shaped mechanical key **MKB** may be used to manually operate one of the power-operated, key-cylinder door locks of the motor vehicle **MV.**

In electronic keys **EK** provided with a mechanical key formed by an appropriately shaped end portion, in the event of failure or malfunctioning of the remote control **RC** and of the transponder chip **TP**, entry to the motor vehicle **MV** is instead guaranteed by a so-called mechanical backup removably housed in the key fob **FOB** and which may be used to manually operate one of the power-operated, key-cylinder door locks of the motor vehicle **MV.**

In other types of electronic keys **EK**, the mechanical key **MKB** formed by an appropriately shaped end portion of the key fob **FOB** is not intended to operate an ignition switch, but only to physically engage a fixed receptacle to enable ignition of the motor vehicle engine, which is then ignited via a special start/stop button, usually arranged on the dashboard, next to the steering wheel, always subject to recognition of the authentication code of the electronic key **EK.**

Other types of electronic keys **EK**, instead, completely lack any mechanical key **MKB** to ignite the motor vehicle engine via the ignition switch, and ignition of the motor vehicle engine is performed via a start/stop button, always subject to recognition of the authentication code of the electronic key **EK.** Furthermore, in all the above-described types of electronic keys **EK**, the key fob **FOB** is equipped with control buttons operable to implement, via the remote control **RC**, a number of functions, such as centralized locking and unlocking of all the power-operated door locks of the motor vehicle **MV**, centralized unlocking of the power-operated lock of just the hatch/boot lid, and possibly the opening thereof, and, in more recent electronic keys **EK**, the timed activation of a light-signalling device of the motor vehicle **MV**, such as the external lights, typically the front and/or rear sidelights, or the direction indicators.

To implement the Key Lock Feature according to the present invention, the short-range wireless communications system **COM** is of the type configured to communicate with the remote controls **RC** of the electronic keys **EK**, to receive the encoded RF signals transmitted by the remote controls **RC** and, where provided for, with the transponder chips **TP** of the electronic keys **EK**, according to known modalities and protocols and therefore not described in detail.

Broadly speaking, the basic purpose of the Key Lock Feature according to the present invention is to allow keyless entry to the motor vehicle **MV** and key or keyless ignition of the engine **P** of the motor vehicle **MV** only by a rightful holder of an electronic key **EK** of the motor vehicle **MV.**

To this end, the Key Lock Feature according to the present invention basically provides for ensuring that keyless entry to the motor vehicle **MV** and key or keyless ignition of the engine **P** of the motor vehicle **MV** may be deactivated, in the sense of inhibiting or blocking the relevant functions, and later on re-activated, in the sense of restoring the relevant functions, on demand and simply and intuitively only by a rightful holder of an electronic key **EK** of the motor vehicle **MV.**

In particular, activation of the Key Lock Feature results in the keyless entry to the motor vehicle **MV** and key or keyless ignition of the engine **P** of the motor vehicle **MV** being deactivated, while deactivation of the Key Lock Feature results in the keyless entry to the motor vehicle **MV** and key or keyless ignition of the engine **P** of the motor vehicle **MV** being re-activated.

In order to make the Key Lock Feature easy and intuitive to use, so as to favour frequent use, the body computer **BC** is conveniently programmed to cause the Key Lock Feature to be activable and deactivable by an electronic key **EK** of the motor vehicle **MV**, and in particular via the remote control **RC** thereof.

Furthermore, always in order to make the Key Lock Feature easy and intuitive to use, so as to favour frequent use, the body computer **BC** is conveniently programmed to cause the Key Lock Feature to be activable and deactivable when the doors of the motor vehicle **MV** are centrally locked and unlocked, respectively.

To this end, the body computer **BC** is conveniently programmed to cause the Key Lock Feature to be activable and deactivable by a deactivation command imparted via one of the control buttons **CB** of the remote control **RC** of an electronic key **EK** of the motor vehicle **MV,** wherein the deactivation command may conveniently be in the form of a longer operation (pressing) or a succession of close shorter operations (presses) of a control button **CB** of the remote control **RC**, and in particular, the centralized door lock button.

In particular, with regards to the activation/setting of the Key Lock Feature, the body computer **BC** is programmed to:
- detect impartation of a command via a control button **CB** of the remote control **RC** of an electronic key **EK**;
- determine whether the imparted command is a traditional centralized door lock command or a Key Lock Feature activation command;
- in response to determining the impartation of a traditional centralized door lock command, centrally lock (the power-operated locks of) the doors of the motor vehicle **MV**, keeping keyless entry to the motor vehicle **MV** and key or keyless ignition of the engine **P** of the motor vehicle **MV** active;
- in response to determining the impartation of a Key Lock Feature activation command, centrally lock (the power-operated locks of) the doors of the motor vehicle **MV** and deactivate keyless entry to the motor vehicle **MV** and key or keyless ignition of the engine **P** of the motor vehicle **MV**, even if the electronic identification code of the electronic key **EK** has been recognised; and
- expediently provide a visual feedback of the activation of the Key Lock Feature.

In an alternative embodiment, the body computer **BC** may be programmed to cause the Key Lock Feature to be activated in response to determining the impartation of a traditional centralized door lock command via the remote control **RC**, the transponder chip **TP** or the mechanical key **MKB** of an electronic key **EK.**

Thus, in this alternative embodiment, keyless entry to the motor vehicle **MV** and key or keyless ignition of the engine **P** of the motor vehicle **MV** will be deactivated every time the doors of the motor vehicle **MV** are centrally locked, independently of the desire of the user of the electronic key **EK**, while in the preferred embodiment previously described, keyless entry to the motor vehicle **MV** and key or keyless ignition of the engine **P** of the motor vehicle **MV** will be deactivated only when the user of the electronic key **EK** desires so, and expresses their desire by imparting a specific Key Lock Feature activation command.

In one embodiment of the invention, the body computer **BC** is programmed to cause the Key Lock Feature to affect individually each electronic key **EK** of the motor vehicle **MV** in respect of which it has been activated, thereby deactivating the keyless entry to the motor vehicle **MV** and key or keyless ignition of the engine **P** of the motor vehicle **MV** performed via the affected electronic keys **EK** of the motor vehicle **MV**, and leaving instead active the keyless entry to the motor vehicle **MV** and the key or keyless ignition of the engine **P** of the motor vehicle **MV** performed via the non-affected electronic keys **EK** of the motor vehicle **MV.**

In a different embodiment of the invention, the body computer **BC** is programmed to cause the Key Lock Feature, once activated via any electronic key **EK** of the motor vehicle **MV**, to affect simultaneously all the electronic keys **EK** of the motor vehicle **MV**, thereby deactivating keyless entry to the motor vehicle MV and key or keyless ignition of the engine **P** of the motor vehicle **MV** performed via any electronic key **EK** of the motor vehicle **MV**, independently of which electronic key **EK** through which the Key Lock Feature has been activated.

Furthermore, in order to allow implementation modes of the Key Lock Feature to be selected, the body computer **BC** is further programmed to allow selection of whether the Key Lock Feature has to:
- be activable in response to determining the impartation of a specific deactivation command via a control button **CB** of the remote control **RC** of an electronic key **EK** of the motor vehicle **MV** or of a traditional centralized door lock command via the door lock control button **CB** of the remote control **RC**, the transponder chip **TP** or the mechanical key **MKB** of an electronic key **EK**, and
- affect individually each electronic key **EK** of the motor vehicle **MV** in respect of which it has been activated, or simultaneously all the electronic keys **EK** of the motor vehicle **MV.**

Furthermore, in order to allow a rightful holder of an electronic key **EK** to choose whether or not the Key Lock Feature is to be made available, the body computer **BC** is also conveniently programmed to cause the Key Lock Feature to be enableable or disableable via the automotive human-machine interface **HMI.**

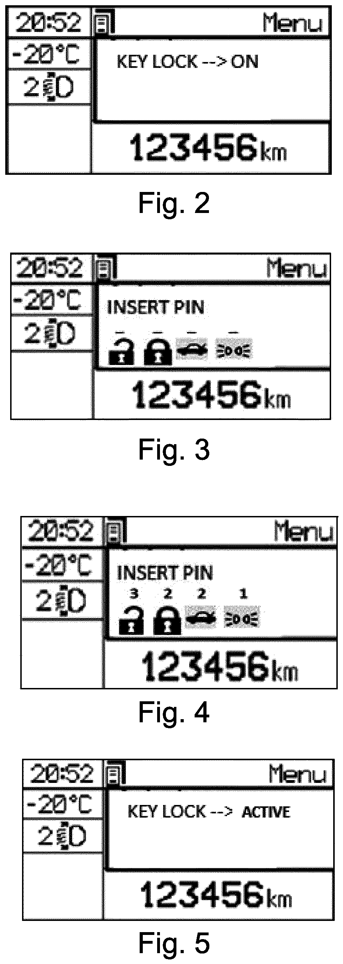

To this end, as shown by way of example in Figures 2 to 5, the body computer **BC** is programmed to:
- cause an entry relating to the Key Lock Feature to be manually or vocally selectable from a settings menu displayed on one of the displays of the automotive human-machine interface **HMI**, or on a display of a personal electronic device of an authorized user in communication with the onboard infotainment system of the motor vehicle **MV** and on which a software application is running;
- in response to detecting selection of the entry relating to the Key Lock Feature from the settings menu, cause one of two different logic values ON and OFF for an activation/deactivation flag of the Key Lock Feature to be selectable (Figure 2);
- in response to acquiring a selected logic value for the activation/deactivation flag, prompt input of an (alpha)numeric authorization code, hereinafter referred to as PIN, and acquire and store the inserted PIN (Figures 3 and 4); and
- in response to acquiring the inputted PIN, visually indicate that the Key Lock Feature has been enabled or disabled on the display of the automotive human-machine interface **HMI** or of the personal electronic device of the authorized user (Figure 5).

Furthermore, the body computer **BC** is programmed to allow:
- a PIN to be inputted for each of the electronic keys **EK** of the motor vehicle **MV** in respect of which the Key Lock Feature is enabled, in the case where the Key Lock Feature affects individually each of the electronic keys **EK** of the motor vehicle **MV** in respect of which it has been activated, and
- a single PIN to be inputted common to all the electronic keys **EK** of the motor vehicle **MV**, in the case where the Key Lock Feature affects all the electronic keys **EK** of the motor vehicle **MV** simultaneously.

Furthermore, the body computer **BC** is conveniently programmed to subject the display of the entry relating to the disablement of the Key Lock Feature in the settings menu to the condition that the Key Lock Feature is deactivated and a coded electronic key **EK** has been recognised.

In order to make input of the PIN easy and intuitive, the body computer **BC** is also conveniently programmed to cause the PIN to be inputtable via an electronic key **EK,** and in particular via the control buttons **CB** of the remote control **RC.**

Thus, the length of the PIN, i.e. the number of (alpha)numeric characters of which it is formed, is conveniently equal to the number of control buttons **CB** of the remote control **RC**, such that each (alpha)numeric character of the PIN may be unambiguously associated with a corresponding control button **CB** of the remote control **RC** and may therefore be inserted by operating the corresponding control button **CB** of the remote control **RC** a number of times equal to the value to be assigned to the (alpha)numeric character.

To this end, the body computer **BC** is programmed to allow the (alpha) numeric characters of the PIN to be inputted, and, for each of the (alpha)numeric characters, to cause, in response to each operation of the corresponding control button **CB** of the remote control **RC**, a corresponding (alpha)numeric character to be displayed on the display of the human-machine interface **HMI** according to a stored sequence, for example all the numbers if the PIN is only numeric, or all the numbers first and then the letters, first lowercase and then uppercase, if the PIN is alphanumeric, and to cause the currently displayed (alpha)numeric character to be acquired when a different control button **CB** of the remote control **RC** associated with another character of the PIN is operated, or after a predetermined timeout occurs since the control button **CB** was last operated. Alternatively, the length of the PIN could also be different from the number of control buttons **CB** of the remote control **RC**, and the PIN could be formed by a specific sequence of operation of the control buttons **CB**, each of which is only operated once. To this end, the body computer **BC** is consequently programmed to acquire the sequence of operation of the control buttons **CB** of the remote control **RC,** the length of which is equal to the length of the PIN.

Furthermore, the body computer **BC** can be programmed to cause the PIN to be inputtable via the human-machine interface **HMI** of the motor vehicle **MV**, and in particular via the keypad or the touch-sensitive display, in combination with, or in alternative to, the input of the PIN via the electronic key **EK.**

The body computer **BC** may conveniently be programmed to cause the Key Lock Feature to be enableable and disableable only when occurrence of a so-called key-on operating state, described hereinafter, is recognized.

Finally, as already mentioned previously, the body computer **BC** may also be programmed to cause the Key Lock Feature to be disableable only when the Key Lock Feature is deactivated.

The key-on operating state and, consequently, the key-off state operating are operative states of the motor vehicle **MV** that depend on the type of electronic key **EK** and correspond to the on and off states of the instrument cluster panel.

In the case where the electronic key **EK** is of the type provided with a mechanical key **MKB**, the key-on state is represented by the facts that a coded electronic key **EK** has been recognised by the body computer **BC**, the mechanical key **MKB** mechanically engages the ignition switch, and the ignition switch is set in the ON position (while the corresponding key-off state is represented by the fact that the ignition switch is in the OFF position). In other types of electronic keys **EK** without a mechanical key or with a mechanical key **MKB** that fails to allow the engine to be ignited, which may hence be ignited by means of a ignition button, the key-on state is simply represented by the facts that an electronic key **EK** has been recognised by the body computer **BC** and, possibly, the key fob **FOB** is placed in an ignition-enabling area or the end portion of the key fob **FOB** mechanically engages a corresponding ignition-enabling receptacle.

Therefore, from an operation standpoint, once the Key Lock Feature has been enabled in the above-described manner, it can be activated on demand via the remote control **RC** of an electronic key **EK** when the door locks have been centrally locked as described above.

In particular, when a rightful holder of an electronic key **EK** does not desire to activate the Key Lock Feature, it is sufficient that the door locks of the motor vehicle **MV** be traditionally centrally locked via the remote control **RC**, the transponder chip **TP** or the mechanical key **MKB** of the electronic key **EK.** In the case where the remote control **RC** is used, the centralized locking of the door locks of the motor vehicle **MV** comprises imparting a traditional centralized locking command, which, in the previously described example, is in the form of a single short operation of the centralized door lock button **CB** of the remote control **RC.**

Instead, when a rightful holder of an electronic key **EK** desires to activate the Key Lock Feature, in the above-described preferred embodiment, it is sufficient that a specific activation command, in the previously described example in the form of a long operation or a succession of close short operations of the centralized door lock button be imparted via the remote control **RC** of the electronic key **EK.**

The received activation command causes the Key Lock Feature to be activated and, consequently, the door lock to be centrally locked and the keyless entry to the motor vehicle **MV** and the key or keyless ignition of the engine **P** of the motor vehicle **MV** to be deactivated.

In the alternative embodiment described above, the received traditional centralized door lock command imparted via the relevant command button **CB** of the remote control **RC**, the transponder chip **TP** or the mechanical key **MKB** will cause the Key Lock Feature to be activated and, consequently, the keyless entry to the motor vehicle **MV** and the key or keyless ignition of the engine **P** of the motor vehicle **MV** to be deactivated.

Instead, with regards to the deactivation of the Key Lock Feature, it depends on the mode in which the Key Lock Feature, once activated, affects the electronic keys **EK** of the motor vehicle **MV.**

In particular, in the embodiment where the Key Lock Feature affects individually each electronic key **EK** of the motor vehicle **MV** in respect of which it has been activated, the body computer **BC** is programmed to cause the Key Lock Feature to be deactivable individually in respect of each one of the affected electronic keys **EK** and only by the electronic key **EK** through which it has been activated, remaining instead activated in respect of the other affected electronic keys **EK.**

Instead, in the embodiment where the Key Lock Feature affects all the electronic keys **EK** of the motor vehicle **MV** simultaneously, the body computer **BC** is programmed to cause the Key Lock Feature to be deactivable by all of the electronic keys **EK** of the motor vehicle **MV** and, when deactivated by any of the electronic keys **EK** of the motor vehicle **MV**, to be deactivated in respect of all the electronic keys **EK** of the motor vehicle **MV.**

Furthermore, in order to allow the Key Lock Feature that is activated in respect of a specific electronic key **EK** of the motor vehicle **MV** to be deactivated, the body computer **BC** is programmed to prompt the input of the same PIN that was inputted and stored when the Key Lock Feature was enabled in respect of that specific electronic key **EK** of the motor vehicle **MV,** via the control buttons **CB** of the remote control **RC** of that electronic key **EK.**

To this end, when the motor vehicle **MV** is locked, in order to allow the Key Lock Feature that is activated in respect of a specific electronic key **EK** of the motor vehicle **MV** to be deactivated the body computer **BC** is programmed to:
- disregard any centralized door unlock command imparted via a control button **CB** of a remote control **RC** or via a transponder chip **TP** of the electronic key **EK,** thereby preventing any attempt to keylessly enter the motor vehicle **MV** by means of that specific electronic key **EK**;
- wait for a PIN to be inputted via the control buttons **CB** of the remote control **RC** of the electronic key **EK**;
- in response to the reception of the inserted PIN, compare the inputted PIN with that stored in association with that electronic key **EK**; and
- in the case where the comparison is successful, deactivate the Key Lock Feature and, consequently, reactivate the keyless entry to the motor vehicle **MV** and the key or keyless ignition of the engine **P** of the motor vehicle **MV,** so resulting in the door locks being centrally unlocked.

In order for the Key Lock Feature to be successfully deactivated, in the case where the Key Lock Feature affects individually each one of the electronic keys **EK** of the motor vehicle **MV**, the inputted PIN must correspond to that stored in association with that electronic key **EK**, while in the case where the Key Lock Feature affects all the electronic keys **EK** of the motor vehicle **MV** simultaneously, the inputted PIN must correspond to that stored and common to all the electronic keys **EK** of the motor vehicle **MV.** Finally, the Key Lock Feature is designed to allow keyless entry to the motor vehicle **MV** and key or keyless ignition of the engine **P** of the motor vehicle **MV** even in the event of failure or malfunction of the remote control **RC** and of the transponder chip **TP** of an electronic key **EK,** for example, because the battery is discharged or the area where the motor vehicle **MV** is located is subject to electromagnetic disturbances such as to cause the remote control **RC** and the transponder chip **TP** to be ineffective.

In this unfortunate situation, entry to the motor vehicle **MV** can only be made in the traditional manner using the mechanical key **MKB** or the mechanical backup of the electronic key **EK**, while ignition the engine **P** of the motor vehicle **MV** with or without a mechanical key first requires setting up a key-on operating state, if the electronic key **EK** is of the type with a mechanical key **MKB**, or a key-on request, if the electronic key **EK** is without a mechanical key **MKB**, this request depending on the ignition system of the engine **P** of the motor vehicle **MV**, and then inserting, via the automotive human-machine interface **HMI** of the motor vehicle, the same PIN inputted when the Key Lock Feature was enabled.

In order to cause key or keyless ignition of the engine **P** of the motor vehicle **MV** even in the event of failure or malfunction of the remote control **RC** and of the transponder chip **TP** of an electronic key **EK**, the body computer **BC** is programmed to:
- recognise occurrence of a key-on state or a key-on request;
- prompt input of a PIN via the automotive human-machine interface **HMI**;
- in response to acquiring an inputted PIN, compare the acquired PIN with that stored when the Key Lock Feature was enabled;
- in the case where the comparison is successful, enable key or keyless ignition of the engine **P** of the motor vehicle **MV**, which may be performed by operating either the ignition switch or the ignition button, and
- in the case where the comparison fails, provide visual feedback on the negative outcome of the comparison.

The advantages that can achieved with the present invention are evident from the foregoing description.

In particular, the present invention results in a simple, inexpensive and intuitive automotive entry and engine ignition control through which keyless entry to the motor vehicle **MV** and key or keyless ignition of the engine **P** of the motor vehicle **MV** may be deactivated to prevent the motor vehicle **MV** from being keylessly entered and the engine **P** of the motor vehicle **MV** from being keyly of keylessly ignited by someone who illicitly came in possession of an electronic key **EK** of the motor vehicle **MV** after the doors of the motor vehicle **MV** have been centrally locked.

Furthermore, the present invention has also been found to provide effective protection against so-called relay attacks perpetrated against passive automotive keyless entry and engine ignition systems, such as described, for example, in the conference paper entitled *"*Relay Attacks on Passive Keyless Entry and Start Systems in Modern Cars" by Aurelien Francillon, Boris Danev and Srdjan Capkun, presented during the Proceedings of the Network and Distributed System Security Symposium, NDSS 2011, held in San Diego, California, USA, from 6th to 9th February 2011.

## Claims

1. An automotive electronic control system (**ECS**) for a motor vehicle (**MV**) having one or more automotive electronic entry and engine ignition keys (**EK**); the automotive electronic control system (**ECS**) is configured to allow:
- centralized door lock and unlock by means of an electronic key (**EK**) of the motor vehicle (**MV**);
- keyless entry to the motor vehicle (**MV**) by an electronic key (**EK**) of the motor vehicle (**MV**); and
- key or keyless ignition of a motor vehicle engine (**P**) by an electronic key (**EK**) of the motor vehicle (**MV**);
wherein the keyless entry to the motor vehicle (**MV**) comprises centralized door lock and unlock responsive to operation of a remote control (**RC**) of an electronic key (**EK**) of the motor vehicle (**MV**);
the automotive electronic control system (**ECS**) is **characterized in that** it is further configured to:
- implement an automotive entry and engine ignition control (**KLF**) designed to allow keyless entry to the motor vehicle (**MV**) and key or keyless ignition of the motor vehicle engine (**P**) only by a rightful holder of an electronic key (**EK**) of the motor vehicle (**MV**); and
- cause the automotive entry and engine ignition control (**KLF**) to be activable and deactivable only by a rightful holder of an electronic key (**EK**) of the motor vehicle (**MV**).

2. The automotive electronic control system (**ECS**) of claim 1, further configured to cause the automotive entry and engine ignition control (**KLF**) to be activable and deactivable by means of an electronic key (**EK**) of the motor vehicle (**MV**).

3. The automotive electronic control system (**ECS**) of claim 2, further configured to cause the automotive entry and engine ignition control (**KLF**) to be activable and deactivable by means of the remote control (**RC**) of the electronic key (**EK**) of the motor vehicle (**MV**).

4. The automotive electronic control system (**ECS**) of claim 2 or 3, further configured to cause the automotive entry and engine ignition control (**KLF**) to be activable and deactivable when the motor vehicle doors are centrally locked and unlocked, respectively.

5. The automotive electronic control system (**ECS**) of claim 3 or 4, further configured to cause the automotive entry and engine ignition control (**KLF**) to be activable by an activation command impartable by means of a control button (**CB**) of the remote control (**RC**) of the electronic key (**EK**) of the motor vehicle (**MV**).

6. The automotive electronic control system (**ECS**) of claim 5, wherein the activation command is a longer operation or a succession of close shorter operations of the control button (**CB**) of the remote control (**RC**) of the electronic key (**EK**) of the motor vehicle (**MV**).

7. The automotive electronic control system (**ECS**) of claim 5 or 6, wherein the control button (**CB**) of the remote control (**RC**) of the electronic key (**EK**) of the motor vehicle (**MV**) is a centralized door lock button.

8. The automotive electronic control system (**ECS**) of any one of claims 3 to 7, further configured to cause the automotive entry and engine ignition control (**KLF**) to be deactivable by inputting, by means of control buttons (**CB**) of the remote control (**RC**) of the electronic key (**EK**) of the motor vehicle (**MV**), an identification code (**PIN**) stored in an enablement phase during which the automotive entry and engine ignition control (**KLF**) is enabled.

9. The automotive electronic control system (**ECS**) of claim 8, further configured to cause the identification code (**PIN**) to be inputtable via an automotive human-machine interface (**HMI**) of the motor vehicle (**MV**).

10. The automotive electronic control system (**ECS**) of claim 8 or 9, wherein the identification code (**PIN**) has either a length equal to the number of control buttons (**CB**) of the remote control (**RC**) of the electronic key (**EK**) of the motor vehicle (**MV**) in such a way that each (alpha) numeric character in the identification code (**PIN**) may be unambiguously associated with a corresponding control button (**CB**) of the remote control (**RC**) and may be inputted by operating the corresponding control button (**CB**) of the remote control (**RC**) for a number of times equal to the value to be assigned to the (alpha)numeric character, or is formed by a specific sequence of operation of the control buttons (**CB**) of the remote control (**RC**), each of which is to be operated only once.

11. The automotive electronic control system (**ECS**) of any of claims 8 to 10, further configured to cause the automotive entry and engine ignition control (**KLF**) to be enableable and disableable via an automotive human-machine interface (**HMI**) of the motor vehicle (**MV**).

12. The automotive electronic control system of claim 11, further configured to cause the automotive entry and engine ignition control (**KLF**) to be enableable and disableable by:
- causing an entry relating to the automotive entry and engine ignition control (**KLF**) to be selectable from a settings menu displayed either on a display of the automotive human-machine interface (**HMI**) or on a display of a personal electronic device in communication with the automotive electronic control system (**ECS**) and on which a software application is running;
- in response to detecting selection of the entry relating to the automotive entry and engine ignition control (**KLF**) on the settings menu, causing an entry to be inputtable indicating whether the automotive entry and engine ignition control (**KLF**) is to be enabled or disabled;
- in response to acquiring the entry indicating whether the automotive entry and engine ignition control (**KLF**) is to be enabled or disabled, prompting input of the identification code (**PIN**); and
- in response to acquiring the inputted identification code (**PIN**), visually indicating that the automotive entry and engine ignition control (**KLF**) is enabled or disabled.

13. The automotive electronic control system of any one of claims 3 to 12, further configured to cause the automotive entry and engine ignition control (**KLF**) to affect only those electronic keys (**EK**) of the motor vehicle (**MV**) in respect of which it has been activated, thereby deactivating keyless entry to the motor vehicle (**MV**) and key or keyless ignition of the motor vehicle engine (**P**) performed with the affected electronic keys (**EK**) of the motor vehicle (**MV**), and leaving, instead, keyless entry to the motor vehicle (**MV**) and key or keyless ignition of the motor vehicle engine (**P**) performable with the non-affected electronic keys (**EK**) of the motor vehicle (**MV**).

14. The automotive electronic control system of any one of claims 3 to 12, further configured to cause the automotive entry and engine ignition control (**KLF**), once activated via any electronic key (**EK**) of the motor vehicle (**MV**), to affect all the electronic keys (**EK**) of the motor vehicle (**MV**), thereby deactivating keyless entry to the motor vehicle (**MV**) and key or keyless ignition of the motor vehicle engine (**P**) performed via any electronic key (**EK**) of the motor vehicle (**MV**), independently of the electronic key (**EK**) through which it has been activated.

15. The automotive electronic control system of claims 13 and 14, further configured to cause the automotive entry and engine ignition control (**KLF**):
- when affecting only those electronic keys (**EK**) of the motor vehicle (**MV**) in respect of which it has been activated, to be deactivable individually in respect of each one of the affected electronic keys (**EK**) of the motor vehicle (**MV**) and only by the same electronic key (**EK**) through which it has been activated, remaining thereby activated in respect of all the other affected electronic keys (**EK**) of the motor vehicle (**MV**); and
- when affecting all the electronic keys (**EK**) of the motor vehicle (**MV**), to be deactivable by all the electronic keys (**EK**) of the motor vehicle (**MV**) and, when deactivated by any electronic key (**EK**) of the motor vehicle (**MV**), to be deactivated in respect of all the electronic keys (**EK**) of the motor vehicle (**MV**).

## Patentansprüche

1. Elektronisches Automobil-Steuerungssystem (ECS) für ein Kraftfahrzeug (MV), das einen oder mehrere elektronische Automobil-Zugangs- und Motorzündungsschlüssel (EK) aufweist, wobei das elektronische Automobil-Steuerungssystem (ECS) dafür konfiguriert ist, Folgendes zu ermöglichen:
- Türzentralverrieglung und -entriegelung mit Hilfe eines elektronischen Schlüssels (EK) des Kraftfahrzeugs (MV),
- schlüsselloser Zugang zu dem Kraftfahrzeug (MV) durch einen elektronischen Schlüssel (EK) des Kraftfahrzeugs (MV) und
- Schlüssel- oder schlüssellose Zündung eines Kraftfahrzeugmotors (P) durch einen elektronischen Schlüssel (EK) des Kraftfahrzeugs (MV),
wobei der schlüssellose Zugang zu dem Kraftfahrzeug (MV) eine Türzentralverrieglung und -entriegelung in Reaktion auf eine Betätigung einer Fernbedienung (RC) eines elektronischen Schlüssels (EK) des Kraftfahrzeugs (MV) umfasst,
wobei das elektronische Automobil-Steuerungssystem (ECS) **dadurch gekennzeichnet ist, dass** es ferner für Folgendes konfiguriert ist:
- eine Automobil-Zugangs- und -Motorzündungssteuerung (KLF) umzusetzen, die dafür ausgelegt ist, einen schlüssellosen Zugang zu dem Kraftfahrzeug (MV) und eine Schlüssel- oder schlüssellose Zündung des Kraftfahrzeugmotors (P) nur durch einen rechtmäßigen Inhaber eines elektronischen Schlüssels (EK) des Kraftfahrzeugs (MV) zu ermöglichen, und
- zu bewirken, dass die Automobil-Zugangs- und -Motorzündungssteuerung (KLF) nur durch einen rechtmäßigen Inhaber eines elektronischen Schlüssels (EK) des Kraftfahrzeugs (MV) aktivierbar und deaktivierbar ist.

2. Elektronisches Automobil-Steuerungssystem (ECS) nach Anspruch 1, das ferner dafür konfiguriert ist, zu bewirken, dass die Automobil-Zugangs- und -Motorzündungssteuerung (KLF) mit Hilfe eines elektronischen Schlüssels (EK) des Kraftfahrzeugs (MV) aktivierbar und deaktivierbar ist.

3. Elektronisches Automobil-Steuerungssystem (ECS) nach Anspruch 2, das ferner dafür konfiguriert ist, zu bewirken, dass die Automobil-Zugangs- und -Motorzündungssteuerung (KLF) mit Hilfe der Fernbedienung (RC) des elektronischen Schlüssels (EK) des Kraftfahrzeugs (MV) aktivierbar und deaktivierbar ist.

4. Elektronisches Automobil-Steuerungssystem (ECS) nach Anspruch 2 oder 3, das ferner dafür konfiguriert ist, zu bewirken, dass die Automobil-Zugangs- und -Motorzündungssteuerung (KLF) jeweils aktivierbar und deaktivierbar ist, wenn die Kraftfahrzeugtüren zentral verriegelt beziehungsweise entriegelt werden.

5. Elektronisches Automobil-Steuerungssystem (ECS) nach Anspruch 3 oder 4, das ferner dafür konfiguriert ist, zu bewirken, dass die Automobil-Zugangs- und -Motorzündungssteuerung (KLF) durch einen Aktivierungsbefehl aktivierbar ist, der mit Hilfe eines Steuerknopfs (CB) der Fernbedienung (RC) des elektronischen Schlüssels (EK) des Kraftfahrzeugs (MV) erteilt werden kann.

6. Elektronisches Automobil-Steuerungssystem (ECS) nach Anspruch 5, wobei der Aktivierungsbefehl eine längere Betätigung oder eine Folge dichter kürzerer Betätigungen des Steuerknopfs (CB) der Fernbedienung (RC) des elektronischen Schlüssels (EK) des Kraftfahrzeugs (MV) ist.

7. Elektronisches Automobil-Steuerungssystem (ECS) nach Anspruch 5 oder 6, wobei der Steuerknopf (CB) der Fernbedienung (RC) des elektronischen Schlüssels (EK) des Kraftfahrzeugs (MV) ein Türzentralverriegelungsknopf ist.

8. Elektronisches Automobil-Steuerungssystem (ECS) nach einem der Ansprüche 3 bis 7, das ferner dafür konfiguriert ist, zu bewirken, dass die Automobil-Zugangs- und -Motorzündungssteuerung (KLF) durch Eingeben eines Identifizierungscodes (PIN), der in einer Freigabephase gespeichert wird, während derer die Automobil-Zugangs- und -Motorzündungssteuerung (KLF) freigegeben wird, mit Hilfe des Steuerknopfs (CB) der Fernbedienung (RC) des elektronischen Schlüssels (EK) des Kraftfahrzeugs (MV) deaktiviert werden kann.

9. Elektronisches Automobil-Steuerungssystem (ECS) nach Anspruch 8, das ferner dafür konfiguriert ist, zu bewirken, dass der Identifizierungscode (PIN) über eine Automobil-Mensch-Maschine-Schnittstelle (HMI) des Kraftfahrzeugs (MV) eingegeben werden kann.

10. Elektronisches Automobil-Steuerungssystem (ECS) nach Anspruch 8 oder 9, wobei der Identifizierungscode (PIN) entweder eine Länge, gleich der Anzahl von Steuerknöpfen (CB) der Fernbedienung (RC) des elektronischen Schlüssels (EK) des Kraftfahrzeugs (MV), aufweist, so dass jedes (alpha-) numerische Zeichen in dem Identifizierungscode (PIN) eindeutig mit einem entsprechenden Steuerknopf (CB) der Fernbedienung (RC) verknüpft werden kann und durch Betätigen des entsprechenden Steuerknopfs (CB) der Fernbedienung (RC) für eine Anzahl von Malen, gleich dem Wert, der dem (alpha-) numerischen Zeichen zugewiesen werden soll, eingegeben werden kann oder durch eine spezifische Betätigungsfolge der Steuerknöpfe (CB) der Fernbedienung (RC), deren jeder nur einmal zu betätigen ist, gebildet wird.

11. Elektronisches Automobil-Steuerungssystem (ECS) nach einem der Ansprüche 8 bis 10, das ferner dafür konfiguriert ist, zu bewirken, dass die Automobil-Zugangs- und -Motorzündungssteuerung (KLF) über eine Automobil-Mensch-Maschine-Schnittstelle (HMI) des Kraftfahrzeugs (MV) aktiviert und deaktiviert werden kann.

12. Elektronisches Automobil-Steuerungssystem (ECS) nach Anspruch 11, das ferner dafür konfiguriert ist, zu bewirken, dass die Automobil-Zugangs- und -Motorzündungssteuerung (KLF) durch Folgendes aktiviert und deaktiviert werden kann:
- Bewirken, dass eine Eingabe bezüglich der Automobil-Zugangs- und -Motorzündungssteuerung (KLF) aus einem Einstellungsmenü ausgewählt werden kann, das entweder auf einer Anzeige der Automobil-Mensch-Maschine-Schnittstelle (HMI) oder auf einer Anzeige eines persönlichen elektronischen Geräts, das in Kommunikation mit dem elektronischen Automobil-Steuerungssystem (ECS) steht und auf dem eine Software-Anwendung läuft, angezeigt wird,
- in Reaktion auf das Erfassen einer Auswahl einer Eingabe bezüglich der Automobil-Zugangs- und -Motorzündungssteuerung (KLF) aus des Einstellungsmenüs Bewirken, dass eine Eingabe eingegeben werden kann, die anzeigt, ob die Automobil-Zugangs- und -Motorzündungssteuerung (KLF) aktiviert oder deaktiviert werden soll,
- in Reaktion auf das Erlangen der Eingabe, die anzeigt, ob die Automobil-Zugangs- und -Motorzündungssteuerung (KLF) aktiviert oder deaktiviert werden soll, Auffordern zum Eingeben des Identifizierungscodes (PIN) und
- in Reaktion auf das Erlangen des eingegebenen Identifizierungscodes (PIN) visuelles Anzeigen, dass die Automobil-Zugangs- und -Motorzündungssteuerung (KLF) aktiviert oder deaktiviert wird.

13. Elektronisches Automobil-Steuerungssystem (ECS) nach einem der Ansprüche 3 bis 12, das ferner dafür konfiguriert ist, zu bewirken, dass die Automobil-Zugangs- und -Motorzündungssteuerung (KLF) nur diejenigen elektronischen Schlüssel (EK) des Kraftfahrzeugs (MV) beeinflusst, in Bezug auf die sie aktiviert worden ist, wodurch schlüsselloser Zugang zu dem Kraftfahrzeug (MV) und Schlüssel- oder schlüssellose Zündung des Kraftfahrzeugmotors (P), die mit den beeinflussten elektronischen Schlüsseln (EK) des Kraftfahrzeugs (MV) durchgeführt werden, deaktiviert und stattdessen schlüsselloser Zugang zu dem Kraftfahrzeug (MV) und Schlüssel- oder schlüssellose Zündung des Kraftfahrzeugmotors (P) mit den nicht beeinflussten elektronischen Schlüsseln (EK) des Kraftfahrzeugs (MV) durchführbar gelassen werden.

14. Elektronisches Automobil-Steuerungssystem (ECS) nach einem der Ansprüche 3 bis 12, das ferner dafür konfiguriert ist, zu bewirken, dass die Automobil-Zugangs- und -Motorzündungssteuerung (KLF), sobald sie über einen beliebigen elektronischen Schlüssel (EK) des Kraftfahrzeugs (MV) aktiviert ist, alle elektronischen Schlüssel (EK) des Kraftfahrzeugs (MV) beeinflusst, wodurch schlüsselloser Zugang zu dem Kraftfahrzeug (MV) und Schlüssel- oder schlüssellose Zündung des Kraftfahrzeugmotors (P), die über einen beliebigen elektronischen Schlüssel (EK) des Kraftfahrzeugs (MV) durchgeführt werden, deaktiviert werden, unabhängig von dem elektronischen Schlüssel (EK), durch den sie aktiviert worden ist.

15. Elektronisches Automobil-Steuerungssystem (ECS) nach Anspruch 13 und 14, das ferner dafür konfiguriert ist, zu bewirken, dass die Automobil-Zugangs- und -Motorzündungssteuerung (KLF):
- wenn sie nur diejenigen elektronischen Schlüssel (EK) des Kraftfahrzeugs (MV) beeinflusst, in Bezug auf die sie aktiviert worden ist, einzeln in Bezug auf jeden der elektronischen Schlüssel (EK) des Kraftfahrzeugs (MV) und nur durch den gleichen elektronischen Schlüssel (EK), durch den sie aktiviert worden ist, deaktiviert werden kann, wodurch sie in Bezug auf alle anderen beeinflussten elektronischen Schlüssel (EK) des Kraftfahrzeugs (MV) aktiviert bleibt, und
- wenn sie alle elektronischen Schlüssel (EK) des Kraftfahrzeugs (MV) beeinflusst, durch alle elektronischen Schlüssel (EK) des Kraftfahrzeugs (MV) deaktiviert werden kann und, wenn sie durch einen beliebigen elektronischen Schlüssel (EK) des Kraftfahrzeugs (MV) deaktiviert wird, in Bezug auf alle elektronischen Schlüssel (EK) des Kraftfahrzeugs (MV) deaktiviert wird.

## Revendications

1. Système de commande électronique (ECS) d'automobile pour un véhicule à moteur (MV) comportant une ou plusieurs clés d'allumage de moteur et d'entrée électronique (EK) d'automobile ; le système de commande électronique (ECS) d'automobile est configuré pour permettre :
- le verrouillage et le déverrouillage centralisés de portière à l'aide d'une clé électronique (EK) du véhicule à moteur (MV) ;
- l'entrée sans clé dans le véhicule à moteur (MV) par une clé électronique (EK) du véhicule à moteur (MV) ; et
- l'allumage avec clé ou sans clé d'un moteur (P) de véhicule à moteur par une clé électronique (EK) du véhicule à moteur (MV) ;
dans lequel l'entrée sans clé dans le véhicule à moteur (MV) comprend le verrouillage et le déverrouillage centralisés de portière en réponse à l'action d'une commande à distance (RC) d'une clé électronique (EK) du véhicule à moteur (MV) ;
le système de commande électronique (ECS) d'automobile est **caractérisé en ce qu'**il est en outre configuré pour :
- mettre en œuvre une commande d'allumage de moteur et d'entrée d'automobile (KLF) conçue pour permettre une entrée sans clé dans le véhicule à moteur (MV) et l'allumage avec clé ou sans clé du moteur (P) de véhicule à moteur uniquement par un détenteur légitime d'une clé électronique (EK) du véhicule à moteur (MV) ; et
- amener la commande d'allumage de moteur et d'entrée d'automobile (KLF) à pouvoir être activée et désactivée uniquement par un détenteur légitime d'une clé électronique (EK) du véhicule à moteur (MV).

2. Système de commande électronique (ECS) d'automobile selon la revendication 1, configuré en outre pour amener la commande d'allumage de moteur et d'entrée d'automobile (KLF) à pouvoir être activée et désactivée à l'aide d'une clé électronique (EK) du véhicule à moteur (MV).

3. Système de commande électronique (ECS) d'automobile selon la revendication 2, configuré en outre pour amener la commande d'allumage de moteur et d'entrée d'automobile (KLF) à pouvoir être activée et désactivée à l'aide de la commande à distance (RC) de la clé électronique (EK) du véhicule à moteur (MV).

4. Système de commande électronique (ECS) d'automobile selon la revendication 2 ou 3, configuré en outre pour amener la commande d'allumage de moteur et d'entrée d'automobile (KLF) à pouvoir être activée et désactivée lorsque les portières du véhicule à moteur sont verrouillées et déverrouillées de manière centralisée, respectivement.

5. Système de commande électronique (ECS) d'automobile selon la revendication 3 ou 4, configuré en outre pour amener la commande d'allumage de moteur et d'entrée d'automobile (KLF) à pouvoir être activée par une instruction d'activation pouvant être donnée à l'aide d'un bouton de commande (CB) de la commande à distance (RC) de la clé électronique (EK) du véhicule à moteur (MV).

6. Système de commande électronique (ECS) d'automobile selon la revendication 5, dans lequel l'instruction d'activation est une opération plus longue ou une succession d'opérations plus courtes proches du bouton de commande (CB) de la commande à distance (RC) de la clé électronique (EK) du véhicule à moteur (MV).

7. Système de commande électronique (ECS) d'automobile selon la revendication 5 ou 6, dans lequel le bouton de commande (CB) de la commande à distance (RC) de la clé électronique (EK) du véhicule à moteur (MV) est un bouton de verrouillage centralisé de portière.

8. Système de commande électronique (ECS) d'automobile selon l'une quelconque des revendications 3 à 7, configuré en outre pour amener la commande d'allumage de moteur et d'entrée d'automobile (KLF) à pouvoir être désactivée en entrant, à l'aide de boutons de commande (CB) de la commande à distance (RC) de la clé électronique (EK) du véhicule à moteur (MV), un code d'identification (PIN) stocké dans une phase d'activation durant laquelle la commande d'allumage de moteur et d'entrée d'automobile (KLF) est activée.

9. Système de commande électronique (ECS) d'automobile selon la revendication 8, configuré en outre pour amener le code d'identification (PIN) à pouvoir être entré via une interface humain-machine (HMI) d'automobile du véhicule à moteur (MV).

10. Système de commande électronique (ECS) d'automobile selon la revendication 8 ou 9, dans lequel le code d'identification (PIN) a une longueur égale au nombre de boutons de commande (CB) de la commande à distance (RC) de la clé électronique (EK) du véhicule à moteur (MV) d'une manière telle que chaque caractère (alpha)numérique dans le code d'identification (PIN) peut être associé sans ambiguïté à un bouton de commande (CB) correspondant de la commande à distance (RC) et peut être entré en actionnant le bouton de commande (CB) correspondant de la commande à distance (RC) pour un nombre de fois égal à la valeur à attribuer au caractère (alpha)numérique, ou est formé par une séquence spécifique d'actions des boutons de commande (CB) de la commande à distance (RC), chacun d'eux devant être actionné une seule fois.

11. Système de commande électronique (ECS) d'automobile selon l'une quelconque des revendications 8 à 10, configuré en outre pour la commande d'allumage de moteur et d'entrée d'automobile (KLF) à pouvoir être activée et désactivée via une interface humain-machine (HMI) d'automobile du véhicule à moteur (MV).

12. Système de commande électronique d'automobile selon la revendication 11, configuré en outre pour amener la commande d'allumage de moteur et d'entrée d'automobile (KLF) à pouvoir être activée et désactivée en :
- amenant une entrée concernant la commande d'allumage de moteur et d'entrée d'automobile (KLF) à pouvoir être sélectionnée parmi un menu de réglages affiché sur un dispositif d'affichage de l'interface humain-machine (HMI) d'automobile ou sur un dispositif d'affichage d'un dispositif électronique personnel en communication avec le système de commande électronique (ECS) d'automobile et sur lequel s'exécute une application logicielle ;
- en réponse à la détection d'une sélection de l'entrée concernant la commande d'allumage de moteur et d'entrée d'automobile (KLF) sur le menu de réglages, amenant une entrée à pouvoir être entrée indiquant si la commande d'allumage de moteur et d'entrée d'automobile (KLF) doit être activée ou désactivée ;
- en réponse à l'acquisition de l'entrée indiquant si la commande d'allumage de moteur et d'entrée d'automobile (KLF) doit être activée ou désactivée, demandant l'entrée du code d'identification (PIN) ; et
- en réponse à l'acquisition du code d'identification (PIN) entré, indiquant visuellement que la commande d'allumage de moteur et d'entrée d'automobile (KLF) est activée ou désactivée.

13. Système de commande électronique d'automobile selon l'une quelconque des revendications 3 à 12, configuré en outre pour amener la commande d'allumage de moteur et d'entrée d'automobile (KLF) à affecter seulement ces clés électroniques (EK) du véhicule à moteur (MV) par rapport auxquelles elle a été activée, désactivant ainsi l'entrée sans clé dans le véhicule à moteur (MV) et l'allumage avec clé ou sans clé du moteur (P) de véhicule à moteur effectué avec les clés électroniques (EK) affectées du véhicule à moteur (MV), et laissant, à la place, l'entrée sans clé dans le véhicule à moteur (MV) et l'allumage avec clé ou sans clé du moteur (P) à véhicule à moteur pouvoir être réalisée avec les clés électroniques (EK) non affectées du véhicule à moteur (MV).

14. Système de commande électronique d'automobile selon l'une quelconque des revendications 3 à 12, configuré en outre pour amener la commande d'allumage de moteur et d'entrée d'automobile (KLF), une fois activée via toute clé électronique (EK) du véhicule à moteur (MV), à affecter toutes les clés électroniques (EK) du véhicule à moteur (MV), désactivant ainsi l'entrée sans clé dans le véhicule à moteur (MV) et l'allumage avec clé ou sans clé du moteur (P) du véhicule à moteur effectué via toute clé électronique (EK) du véhicule à moteur (MV), indépendamment de la clé électronique (EK) par le biais de laquelle elle a été activée.

15. Système de commande électronique d'automobile selon les revendications 13 et 14, configuré en outre pour amener la commande d'allumage de moteur et d'entrée d'automobile (KLF) :
- lorsque l'on affecte seulement ces clés électroniques (EK) du véhicule à moteur (MV) par rapport auxquelles elle a été activée, à pouvoir être désactivée individuellement par rapport à chacune des clés électroniques (EK) affectées du véhicule à moteur (MV) et seulement par la même clé électronique (EK) par le biais de laquelle elle a été activée, restant ainsi activée par rapport à toutes les autres clés électroniques (EK) affectées du véhicule à moteur (MV) ; et
- lorsque l'on affecte toutes les clés électroniques (EK) du véhicule à moteur (MV), à pouvoir être désactivée par toutes les clés électroniques (EK) du véhicule à moteur (MV) et, lorsqu'elle est désactivée par toute clé électronique (EK) du véhicule à moteur (MV), à être désactivée par rapport à toutes les clés électroniques (EK) du véhicule à moteur (MV).
